# EUROPÄISCHE PATENTANMELDUNG

(11) **EP 1 533 889 A2**
(43) Veröffentlichungstag der Anmeldung: **25.05.2005**
(21) Anmeldenummer: 04016921.1
(22) Anmeldetag: 17.07.2004
(51) Int. Cl.: H02M 7/48

(54) **Umrichter für eine elektrische Maschine, insbesondere für einen Starter oder einen Starter-Generator für ein Kraftfahrzeug**

(30) Priorität: 25.09.2003 DE 10344633
(71) Anmelder: ROBERT BOSCH GMBH, 70442 Stuttgart (DE)
(72) Erfinder: Beulich, Klaus A., 74343 Sachsenheim (DE)

(57) **Zusammenfassung**

Ein Umrichter für einen Starter-Generator eines Kraftfahrzeugs umfasst Brückenschaltungen und einen Folienkondensator (FK). Die elektrische Verbindung zwischen dem Folienkondensator (FK) und den Brückenschaltungen wird busbarlos mittels dünnen separaten Streifenleitern (SL1 bis SL4) realisiert. Ferner weist ein Umrichter eine Folienkondensator (FK) mit zumindest zwei separaten Teilen (T1, T2, T3) auf, welche mit Stromschienen (SS1, SS2) elektrisch verbunden sind.

## Beschreibung

Die Erfindung betrifft einen Umrichter für eine elektrische Maschine, insbesondere für einen Starter oder einen Starter-Generator für ein Kraftfahrzeug nach dem Oberbegriff des Patentanspruchs 1. Des Weiteren betrifft die Erfindung einen Umrichter für eine elektrische Maschine nach dem Oberbegriff des Patentanspruchs 7.

### Stand der Technik

Pulsumrichter für elektrische Maschinen sind aus der Kraftfahrzeugtechnik bekannt. Dabei werden beispielsweise Zwischenkreisumrichter mit einem Spannungszwischenkreis verwendet. Der Spannungszwischenkreis kann dabei durch ein Gleichspannungsnetz, welches beispielsweise die Bordnetzbatterie eines Kraftfahrzeugs enthält, gebildet werden. Darüber hinaus umfasst der Spannungszwischenkreis einen Zwischenkreiskondensator, mit dessen Verwendung Pulsströme erzeugt beziehungsweise die Wechselanteile des Stromes übernommen werden. Derartige Pulsströme werden im allgemeinen bei allen getakteten Umrichterbrücken erzeugt.

Eine derartige Umrichterbrücke weist bei zweistufigen Stromrichtern eine oder mehrere Halbbrücken auf, die den Ausgang abwechselnd entweder mit dem positiven oder dem negativen Zwischenkreispotenzial elektrisch verbinden. Zum Verbinden des Ausgangs mit dem positiven Zwischenkreispotenzial weist eine Halbbrücke zumindest einen High-Side-Schalter, und zum Verbinden des Ausgangs mit dem negativen Zwischenkreispotenzial weist eine Halbbrücke zumindest einen Low-Side-Schalter auf.

Für die elektrische Verbindung im Gleichspannungszwischenkreis für Pulsumrichter für beispielsweise einen Starter-Generator in einem Kraftfahrzeug wird in der Regel eine Busbar verwendet. Die Busbar besteht aus elektrisch leitfähigen Platten, welche beabstandet zueinander eine niederohmige Verbindung darstellen. Mit der Busbar werden die Leistungsschalter bzw. das Leistungsmodul, der Zwischenkreiskondensator und die Gleichspannungsanschlüsse elektrisch verbunden. Die Busbar trägt den Wechselanteil des über den Kondensator geführten Stroms sowie den Gleichanteil des zu den Batterieanschlussklemmen geführten Stroms. Für den Zwischenkreiskondensator werden meist diskrete Bauteile wie beispielsweise Elektrolytkondensatoren oder Folienkondensatoren verwendet. Folienkondensatoren werden allgemein als diskret bedrahtete Bauelemente oder als SMD (Surface Mounted Device)-Bauelemente hergestellt. Die Kondensatoren können direkt auf den Leistungsmodulen, beispielsweise durch Löten, angebracht werden, oder an einer konzentrierten Stelle mit dem Leistungsmodul verbunden werden.

Aus der deutschen Patentschrift DE 198 46 156 C1 ist ein mehrphasiger Umrichter bekannt, welcher zur Ausbilden von Halbbrückenschaltungen mehrere Halbleiter-Leistungsbauelemente und Zwischenkreiskondensatoren aufweist. Zur Realisierung eines niederinduktiven Aufbaus sind die Halbbrücken über als Busbar ausgeführte Sammelschienen miteinander elektrisch verbunden. Die Busbar erfordert einen relativ komplexen und aufwändigen Konstruktionsaufbau des Umrichters und eine Erhöhung der Bauteilezahl. Ferner ist die elektrische Verbindung zu den Leistungsmodulen des Umrichters relativ lang, wodurch die Anforderung einer möglichst niederinduktiven Anbindung der Leistungsschalter und damit einer Reduzierung von Überspannungsspitzen nur unzureichend erfüllt werden kann.

Des Weiteren ist ein Umrichter für einen Starter-Generator eines Kraftfahrzeugs aus der deutschen Offenlegungsschrift DE 101 23 626 A1 bekannt. Der Umrichter besteht aus mehreren an Phasenwicklungen angeschlossenen Brückenschaltungen. Jede der Brückenschaltungen umfasst mehrere elektrisch steuerbare Schalter und einen als Kondensator ausgebildeten Zwischenspeicher. Die Zwischenspeicher der Brückenschaltungen werden durch ein Kontaktieren der Elektroden eines Folienkondensators mit den Brückenschaltungen mittels unbedingt erforderlicher Stromschienen erreicht. Der Folienkondensator ist an der Außenfläche eines Kühlkörpers angebracht, wobei der Kühlkörper den Starter-Generator des Kraftfahrzeugs umgibt. Die Stromschienen des Umrichters erfordern einen relativ hohen Montageaufwand und weisen einen relativ großen Querschnitt auf. Des Weiteren ist nur eine relativ unzureichende flexible Gestaltung des Folienkondensators und der Stromschienen möglich.

Eine Realisierung der Busbar ist relativ aufwändig und kostenintensiv. Ein weiterer Nachteil bei der Verwendung einer Busbar ist darin zu sehen, dass der Kondensator beim Kontaktieren mit der Busbar durch lokale Überhitzung beschädigt oder zerstört werden kann. Die Busbar bedingt eine relativ eingeschränkten Freiheitsgrad bei der Konstruktion des Umrichters und bedingt eine relativ schwierige Anbindung des Kondensators an die Kühlung des Starter-Generators.

### Vorteile der Erfindung

Ein erster Aspekt der Erfindung betrachtet einen Umrichter für eine elektrische Maschine, insbesondere für einen Starter oder einen Starter-Generator in einem Kraftfahrzeug, welcher eine Mehrzahl an Brückenschaltungen aufweist. Jede Brückenschaltung weist ein Leistungsmodul mit zumindest zwei steuerbaren elektrischen Schaltern auf, wobei das Leistungsmodul mit einem an der Oberfläche der Maschine angeordneten Folienkondensator zur Erzeugung eines jeweiligen Zwischenspeichers einer Brückenschaltung elektrisch verbunden ist.

Ein wesentlicher Gedanke der Erfindung ist es, dass die elektrische Verbindung zwischen jeweils einer Brückenschaltung und dem Folienkondensator busbarlos ausgebildet ist. Durch den erfindungsgemäßen Umrichter kann ein busbarloser Gleichspannungszwischenkreis realisiert werden, der mit wesentlich kleinerem Montageaufwand hergestellt werden kann. Aufgrund der busbarlosen Realisierung der elektrischen Verbindung kann eine elektrische Anbindung an die Leistungsmodule mit minimaler Länge gewährleistet werden, wodurch ein äußerst niederinduktiver Aufbau ermöglicht werden kann. Dadurch können auch die Überspannungsspitzen deutlich vermindert werden.

In vorteilhafter Weise ist die busbarlose elektrische Verbindung zwischen einer Brückenschaltung und dem Folienkondensator über jeweils separate Verbindungsleitungen ohne Stromschienen ausgebildet. Durch das Weglassen von Stromschienen kann eine wesentlich kürzere elektrische Verbindung zwischen den Leistungsmodulen und dem Folienkondensator realisiert werden, woraus ein besonders niederinduktiver Aufbau des Umrichters resultiert.

Bevorzugt ist es, wenn der Folienkondensator mit einer mechanisch verstärkten, elektrisch leitenden Folie gewickelt ist. Dies ermöglicht einen wesentlich höheren Stromfluss im Folienkondensator, wodurch der Zwischenkreisstrom im wesentlichen direkt im Kondensator geführt werden kann. Der Kondensator kann mit einer hohen Stromtragfähigkeit ausgebildet werden.

Die elektrische Verbindung zwischen den Elektroden des Folienkondensators und dem Leistungsmodul einer Brückenschaltung ist in einer vorteilhaften Ausführung über zwei dünne Streifenleitungen ausgebildet. Dadurch kann im Vergleich zu Stromschienen eine erhebliche Verminderung des Platzbedarfs erzielt werden. Des Weiteren fließt der Strom direkt im Kern des Kondensators und nicht mehr in der Busbar oder in einer an dem Folienkondensator angeschweißten Stromschiene.

Es kann vorgesehen sein, dass die Streifenleitungen im wesentlichen die gleiche Breite aufweisen. Betrachtet man den Umrichter von oben mittels einer Draufsichtdarstellung, so kann vorgesehen sein, dass die beiden Streifenleiter zur Kontaktierung der Elektroden des Folienkondensators mit einem Leistungsmodul einer Brückenschaltung im Bereich des Folienkondensators deckungsgleich angeordnet sind. Dadurch kann eine weitere Minimierung des Platzbedarfs der elektrischen Verbindung zwischen den Leistungsmodulen und dem Folienkondensator ermöglicht werden. Die von den flexiblen Anschlüssen bzw. den Streifenleitungen zum Folienkondensator umspannte Fläche kann sehr klein gehalten werden, was sich wiederum günstig auf die Leitungsinduktivität auswirkt. Der Folienkondensator kann mit minimalem Abstand zum Kühlkörper montiert werden. Des Weiteren ermöglicht der erfindungsgemäße Umrichter, dass die Anschlüsse zur Spannungsversorgungsquelle in vielfältiger Weise herausgeführt werden können und dadurch zusätzliche Freiheitsgrade in der Konstruktion des Umrichters gegeben sind.

Ein weiterer Vorteil des erfindungsgemäßen Umrichters ist darin zu sehen, dass aufgrund der busbarlosen Realisierung der elektrischen Verbindung zwischen den Leistungsmodulen und dem Folienkondensator keine Herstellungsprobleme im Hinblick auf Beschädigung und Funktionseinschränkung aufgrund von lokaler Überhitzung beim Kontaktieren des Kondensators mit der Busbar auftreten. Ferner ermöglicht die Ausführung der elektrischen Verbindung ohne eine Busbar auch einen erweiterten Freiheitsgrad in der Konstruktion und der Anbindung des Folienkondensators an die Kühlung.

Ein weiterer Aspekt der Erfindung betrachtet einen Umrichter für eine elektrische Maschine, insbesondere für einen Starter oder einen Starter-Generator in einem Kraftfahrzeug, welcher eine Mehrzahl an Brückenschaltungen aufweist, wobei jede Brückenschaltung ein Leistungsmodul mit zumindest einem steuerbaren elektrischen Schalter aufweist und mittels Stromschienen mit einem an der Oberfläche der Maschine angeordneten Folienkondensator zur Erzeugung eines jeweiligen Zwischenspeichers einer Brückenschaltung elektrisch verbunden ist,. Ein wesentlicher Gedanke dieses erfindungsgemäßen Umrichters ist es, dass der Folienkondensator stabförmig ausgebildet ist und zumindest zwei separate Teile aufweist, wobei die ersten Elektroden der beiden Teile mit einer ersten Stromschiene und die beiden zweiten Elektroden der beiden Teile mit einer zweiten Stromschiene elektrisch verbunden sind.

Durch den erfindungsgemäßen Umrichter kann der benötigte Folienkondensator in vielfältiger Weise aus mehreren Teilen ausgebildet sein und an die erforderlichen Gegebenheiten und Ausbildungen der Oberflächenstruktur der elektrischen Maschine angepasst werden. Ferner ermöglicht der Umrichter ein Anordnen mit einem relativ geringem Montageaufwand und eine relativ kurze elektrische Anbindung zu den Leistungsmodulen, da ein Anordnen der verschiedenen Teile in unmittelbarer Nähe zu den zugeordneten Leistungsmodulen ermöglicht werden kann.

Die Teile des Folienkondensators können daher in flexibler Weise angeordnet werden. Die Anordnung der Teile des Folienkondensators in unmittelbarer Nähe zu den Leistungsmodulen bzw. zu den Leistungsschaltern der Leistungsmodule ermöglicht eine sehr niederinduktive elektrische Verbindung zwischen den Modulen und dem Folienkondensatorteilen. Ferner ermöglicht die stabförmige Gestaltung des Folienkondensators eine kostengünstige Herstellungsmöglichkeit des Bauteils, welches gleichzeitig die erforderlichen elektronischen Bauteil-Anforderungen erfüllt.

Bevorzugt erweist es sich, wenn die separaten Teile des Folienkondensators im wesentlichen den gleichen Abstand zur Oberfläche der elektrischen Maschine aufweisen. Ferner wird ermöglicht, dass die verteilte Kapazität des Folienkondensators allen Leistungsmodulen zur Verfügung steht.

Es kann vorgesehen sein, dass die beiden Teile des Folienkondensators im wesentlichen senkrecht zueinander in einer Ebene parallel zu einer Oberfläche der Maschine angeordnet sind. Die elektrische Verbindung der Leistungsmodule kann in einer bevorzugten Ausführungsform busbarlos ausgebildet sein.

Bei den erfindungsgemäßen Umrichtern kann vorgesehen sein, dass der Folienkondensator und die Leistungsmodule der Brückenschaltungen auf einem die Maschine zumindest teilweise umgebenden Kühlkörper angeordnet sind. Bei den Umrichtern kann auch vorgesehen sein, dass der Folienkondensator und die Leistungsmodule der Brückenschaltungen an unterschiedlich zueinander orientierten Oberflächenseiten oder auf einer gemeinsamen Oberflächenseite des Kühlkörpers angeordnet sind. Der Folienkondensator und die Leistungsmodule können hierbei derart übereinander auf einer Oberflächenseite des Kühlkörpers angeordnet sein, dass die Leistungsmodule zwischen dem Folienkondensator und der Oberflächenseite des Kühlkörpers ausgebildet sind. Sowohl die elektrische Maschine als auch die Leistungsmodule können dadurch sher gut gekühlt werden.

### Zeichnungen

Ausführungsbeispiele der Erfindung werden nachfolgend anhand der zugehörigen Zeichnungen näher erläutert. Es zeigen:
- Fig. 1: ein Schaltbild eines bekannten Umrichters mit mehreren Brückenschaltungen;
- Fig. 2: ein erstes Ausführungsbeispiel einer Anordnung eines Folienkondensators und Leistungsschaltern auf einer Oberfläche einer elektrischen Maschine;
- Fig. 3: ein zweites Ausführungsbeispiel einer Anordnung eines Folienkondensators und Leistungsschaltern auf einer Oberfläche einer elektrischen Maschine;
- Fig. 4: ein Draufsicht auf das Ausführungsbeispiel gemäß Fig. 3, mit einer Darstellung einer Anordnung mit mehreren Teilen eines Folienkondensators eines erfindungsgemäßen Umrichters;
- Fig. 5: eine Schnittdarstellung eines erfindungsgemäßen Umrichters;
- Fig. 6: eine Schnittdarstellung der busbarlosen elektrischen Verbindung zwischen dem Folienkondensator und einem Leistungsmodul eines Umrichters; und
- Fig. 7: eine Draufsicht auf das Ausführungsbeispiel des Umrichters gemäß Fig. 5.

### Beschreibung des Ausführungsbeispiels

In den Figuren werden gleiche oder funktionsgleiche Bauteile mit denselben Bezugszeichen versehen.

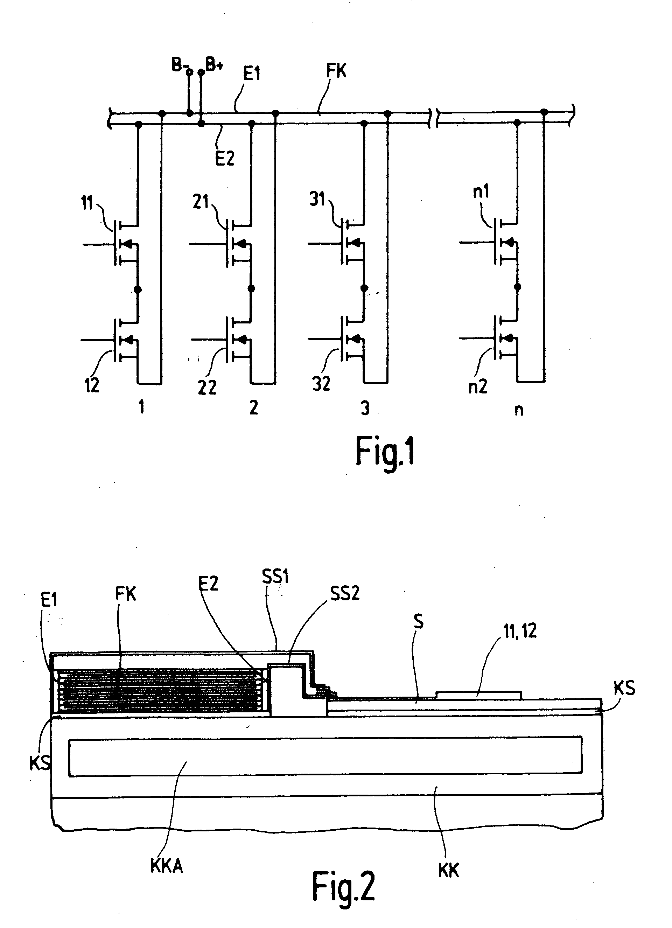

Ein Schaltbild eines bekannten Umrichters für einen Starter-Generator für ein Kraftfahrzeug ist in Fig. 1 gezeigt. Der Umrichter ist für einen vielphasigen Betrieb eines ansonsten dreiphasigen Starter-Generators konzipiert. Der Umrichter umfasst n Brückenschaltungen 1, 2, 3, ..., n, wobei sich die Anzahl der n Brückenschaltungen nach der Anzahl k der gegeneinander zeitversetzten Takte, mit denen nicht dargestellte Phasenwicklungen des Starter-Generators angesteuert werden, richtet. Bei dem hier zugrunde gelegten dreiphasigen Starter-Generator beträgt folglich die Anzahl n der Brückenschaltungen n = 3xk. Eine Brückenschaltung weist jeweils zwei elektrisch steuerbare Schalter auf, welche in Reihe geschaltet sind. Die erste Brückenschaltung 1 umfasst die Schalter 11 und 12. Analog umfassen die weiteren Brückenschaltungen 2, 3, ..., n die Schalter 21 und 22, bzw, 31 und 32 bzw. n1 und n2.

Die als Transistoren ausgebildeten, elektrisch steuerbaren Schalter 11, 21, 31 und n1 der Brückenschaltungen 1 bzw. 2 bzw. 3 bzw. n1 sind als High-Side-Schalter ausgebildet. Über diese High-Side-Schalter werden die jeweils mit den Brückenschaltungen verbundenen nicht dargestellten Phasenwicklungen an das positive Potenzial B+ einer Versorgungsspannungsquelle durchgeschaltet. Über die ebenfalls als Transistoren ausgebildeten Low-Side-Schalter 12, 22, 32 und n2 der entsprechenden Brückenschaltungen 1 bis n werden die nicht dargestellten Phasenwicklungen an das negativen Potenzial B- der Versorgungsspannungsquelle durchgeschaltet. Die Schalter 11 bis n2 werden über ihre Gate-Anschlüsse mit einer nicht dargestellte Steuereinheit mit zeitversetzten Takten pulsweitenmoduliert angesteuert. Des Weiteren umfasst der Umrichter in Fig. 1 einen Zwischenspeicher in Form eines Folienkondensators FK, welcher parallel zu den Schaltern 11 bis n2 geschaltet ist. Der Folienkondensator FK weist eine erste Elektrode E1 und eine zweite Elektrode E2 auf, an denen über die Länge des Folienkondensators FK die Schalter 11 bis n2 angeschlossen sind. Die durch den mehrphasigen Betrieb des Umrichters hervorgerufenen Spannungsspitzen werden mittels diesem Folienkondensator FK geglättet.

Die erste Elektrode E1 weist einen Anschluss für das positive Potenzial B+ und die zweite Elektrode E2 weist einen Anschluss für das negative Potenzial B- der Versorgungsspannungsquelle auf. Die Versorgungsspannungsquelle ist im Ausführungsbeispiel als Batterie eines Kraftfahrzeugs ausgeführt. Der Folienkondensator FK umgibt im Ausführungsbeispiel das Gehäuse des Starter-Generators und weist lediglich an den Anschlüssen für die Potenziale der Versorgungsspannungsquelle einen offenen Bereich auf, wodurch ermöglicht wird, dass unterschiedliche thermische Ausdehnungen des Gehäuses des Starter-Generators und des Folienkondensators FK ausgeglichen werden können.

In Fig. 2 ist ein Ausschnitt einer Schnittdarstellung eines ersten Ausführungsbeispiels des Umrichters und des Starter-Generators gezeigt. Der Starter-Generator ist von einem Kühlkörper KK umgeben, der beispielsweise zylinderförmig ausgebildet sein kann. Der Kühlkörper KK umfasst zumindest einen Kühlkanal KKA durch den Kühlmittel zum Kühlen des Starter-Generators und der Leistungsmodule fließt. Der Folienkondensator FK umgibt den zylinderförmigen Kühlkörper KK auf dessen Oberfläche zumindest teilweise. Der Folienkondensator FK ist mittels einer Klebeschicht KS an der Oberfläche des Kühlkörpers KK befestigt. Neben dem Folienkondensator FK sind die Leistungsmodule auf der gleichen Oberflächenseite des Kühlkörpers KK angeordnet. Die die Brückenschaltungen 1 bis n umfassenden Leistungsmodule sind verteilt über den Umfang des Kühlkörpers KK angeordnet und ebenfalls mittels einer Klebeschicht KS an der Oberfläche des Kühlkörpers KK befestigt. Jedes Leistungsmodul umfasst ein Substrat S, auf dem die Schalter der entsprechenden Brückenschaltung angeordnet sind.

In Fig. 2 ist das Leistungsmodul mit der Brückenschaltung 1 und den zugeordneten Schaltern 11 und 12 gezeigt. Bei dem dort gezeigten Umrichter sind die Schalter 11 und 12 über eine erste Stromschiene SS1 mit der ersten Elektrode E1 und mit einer zweiten Stromschiene SS2 mit der zweiten Elektrode E2 eines ersten Teils des Folienkondensators FK elektrisch verbunden.

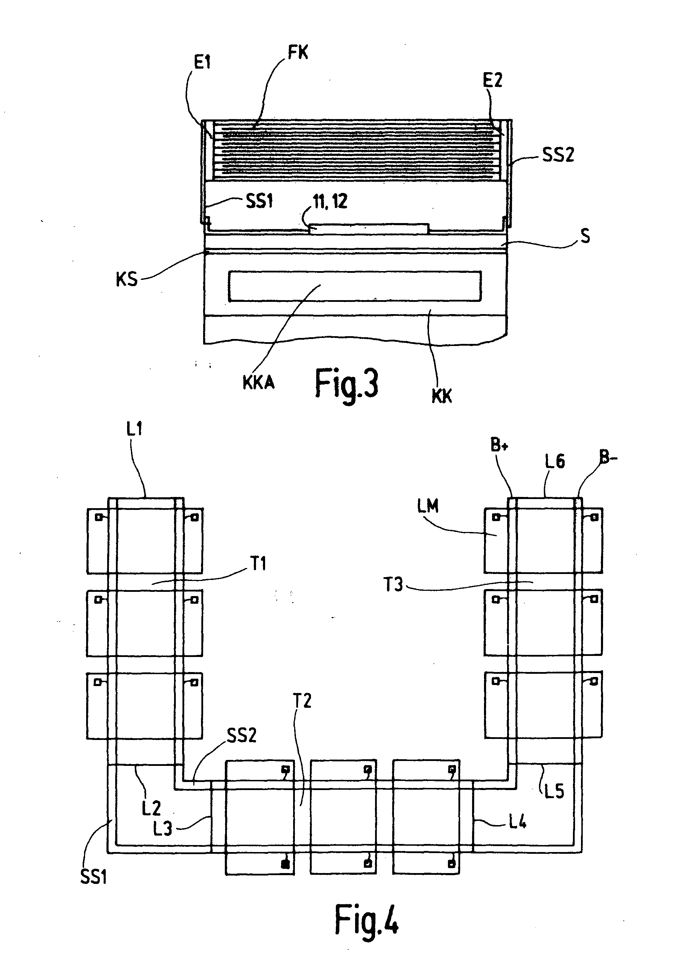

In Fig. 3 ist ein zweites Ausführungsbeispiel des Umrichters und des Starter-Generators als Ausschnitt einer Schnittdarstellung gezeigt. In Fig. 3 sind der Folienkondensator FK und das Leistungsmodul mit den Schaltern 11 und 12 sowie dem Substrat S in zwei Ebenen übereinander angeordnet. Das Substrat S ist über eine Klebeschicht KS auf der Oberfläche des Kühlkörpers KK befestigt. Das Leistungsmodul ist in der ersten Ebene und der Folienkondensator FK in einer über der ersten Ebene angeordneten zweiten Ebene ausgebildet. Der Folienkondensator FK wird über die Stromschienen SS1 und SS2, welche die Schalter 11 und 12 des Leistungsmoduls und die Elektroden E1 und E2 des Folienkondensators FK elektrisch kontaktieren in der zweiten Ebene gehalten.

In Fig. 4 ist eine Draufsicht auf das in Fig. 3 beschriebene Ausführungsbeispiel gezeigt. Gemäß der erfindungsgemäßen Ausbildung umfasst der Folienkondensator FK mehrere Teile. In der in Fig. 4 gezeigten Ausführung weist der Folienkondensator FK eine ersten Teil T1, einen zweiten Teil T2 und einen dritten Teil T3 auf. Der erste Teil T1 wird durch die Linien L1 und L2 in schematischer Darstellung begrenzt. Analog wird der zweite Teil T2 durch die Linien L3 und L4 und der dritte Teil T3 durch die Linien L5 und L6 begrenzt. Die drei Teile T1 bis T3 werden im Ausführungsbeispiel gemäß einer U-Form angeordnet, wobei die Teile T1 und T3 parallel zueinander und senkrecht zum zweiten Teil T2 angeordnet sind. Mittels der Stromschienen SS1 uns SS2 werden die sich in einer Ebene befindlichen Teile T1 bis T3 elektrisch verbunden, wobei die Stromschiene SS1 jeweils die ersten Elektroden E1 der Teile T1 bis T3 und die Stromschiene SS2 jeweils die zweiten Elektroden E2 der Teile T1 bis T3 des Folienkondensators FK elektrisch kontaktiert. Die Anschlüsse B+ und B- für das Bordnetz sind in die Stromschienen SS2 bzw. SS1 integriert. Generell ist auch jede andere Anordnung der Teile des Folienkondensators FK abhängig von der Oberflächenstruktur des Kühlkörpers KK möglich. Wesentlich ist es, dass durch die Gestaltung eine elektrische Verbindung zwischen dem Folienkondensator FK und den Leistungsmodulen LM realisiert werden kann, die eine minimale Länge aufweist und so einer möglichst niederinduktiven elektrischen Anbindung gerecht wird.

Im Ausführungsbeispiel gemäß Fig. 4 sind die Teile T1 bis T3 des Folienkondensators FK U-förmig angeordnet. Es kann auch vorgesehen sein, dass die Teile I-förmig oder in jeder anderen Form, welche durch stabförmige Folienkondensatoren realisiert werden kann, angeordnet sind. Der Folienkondensator FK kann dabei auch zwei oder mehr als drei Teile aufweisen.

Eine Ausführung mit einem aus mehreren Teilen bestehenden Folienkondensators FK ist auch für die Anordnungen gemäß den Figuren 2 und 3 möglich.

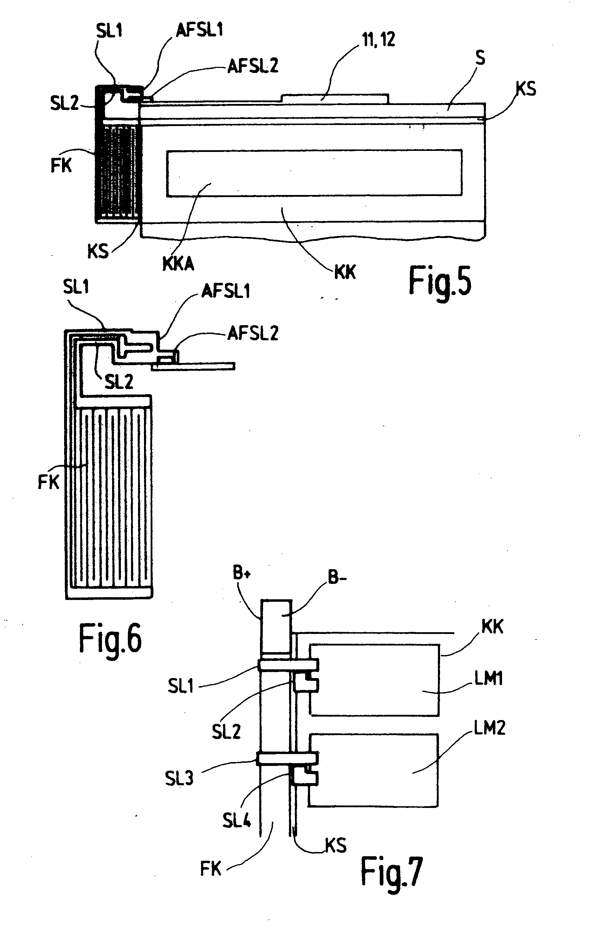

In Fig. 5 ist ein erfindungsgemäßer Umrichter gezeigt, bei dem der Folienkondensator FK an einer ersten Oberflächenseite des Kühlkörpers KK und das Leistungsmodul mit dem Substrat S und den Schaltern 11 und 12 auf einer zweiten Oberflächenseite des Kühlkörpers KK mittels der Klebeschicht KS befestigt sind. Auch bei dieser Ausführung der Erfindung kann der Folienkondensator FK und die Leistungsmodule auf einer Oberflächenseite gemeinsam nebeneinander angeordnet sein. Es kann aber auch hier eine Ausführung ausgebildet sein, bei der der Folienkondensator FK und die Leistungsmodule LM in zwei Ebenen über dem Kühlkörper KK angeordnet sind. In dem in Fig. 5 gezeigten Ausschnitt einer Schnittdarstellung des Umrichters ist der Folienkondensator FK mit einer mechanisch verstärkten elektrisch leitenden Folie gewickelt, wodurch ein höherer Strom im Kondensator fließen kann. Die elektrische Verbindung zu den Leistungsmodulen ist in diesem Beispiel busbarlos ausgeführt. Die busbarlose elektrische Verbindung ist dabei ohne Stromschienen realisiert. Der Strom fließt direkt im Kern des Folienkondensators FK welcher eine hohe Stromtragfähigkeit aufweist. Die elektrische Verbindung zwischen den Leistungsmodulen LM und dem Folienkondensator FK wird durch streifenförmige Verbindungsleitungen SL1 uns SL2 hergestellt. Indem bei dieser busbarlosen Anbindung keine Stromschienen verwendet werden, kann durch den Einsatz der sehr dünnen und kurz realisierbaren Streifenleitungen SL1 und SL2 eine minimierte Verbindungslänge gewährleistet werden, wodurch ein besonders niederinduktiver Aufbau ermöglicht werden kann. In Fig. 6 ist eine vergrößerte Darstellung der elektrischen Anbindung des Folienkondensators FK an die Schalter des Leistungsmoduls LM gezeigt. Durch den vollständigen Verzicht auf eine Busbar können die Anschlüsse bzw. die elektrischen Verbindungen mittels der Streifenleitungen SL1 und SL2 und der Anschlussfahnen AFSL1 und AFSL2 sehr flexibel gestaltet und an die erforderlichen Gegebenheiten bei der Konstruktion relativ einfach angepasst werden.

In Fig. 7 ist eine Draufsicht eines Ausschnitts der Ausführung gemäß Fig. 5 gezeigt. Das Leistungsmodul LM1, welches die Schalter 11 und 12 aufweist, kann in platzsparender Weise mittels sehr kurzen und im Querschnitt relativ dünnen Streifenleitern SL1 und SL2 mit den Elektroden E1 und E2 des stabförmigen Folienkondensators FK kontaktiert werden. In analoger Weise kann das Leistungsmodul LM2, welches beispielsweise die Schalter 21 und 22 aufweist, durch die Streifenleiter SL3 und SL4 mit den entsprechenden Elektroden des Folienkondensators FK kontaktiert werden. Die flexiblen Anschlüsse der Streifenleiter SL1 bis SL4 zum Kondensator FK umspannen eine relativ kleine Fläche. Im Ausführungsbeispiel sind die Streifenleiter SL1 und SL2 sowie SL3 und SL4 mit gleicher Breite ausgeführt. Ferner sind die Streifenleiter SL1 und SL2 zumindest im Bereich des Folienkondensators FK derart angeordnet, dass sie in der Draufsichtdarstellung gemäß Fig. 7 deckungsgleich sind. Analog gilt dies für die Anordnung der Streifenleiter SL3 und SL4. Die Anschlüsse B* und B- für die Versorgungsspannung können bei der erfindungsgemäßen Realisierung des Umrichters in vielfältiger Weise herausgeführt werden. Im Beispiel gemäß Fig. 7 ist der Anschluss B- an der Oberseite und der Anschluss B+ an der Unterseite ausgeführt. Jedes Leistungsmodul LM1 und LM2 bzw. deren Brückenschaltungen werden somit mit jeweils separaten Verbindungsleitungen in Form der Streifenleiter SL1 bis SL4 ohne das Verwenden von Stromschienen kontaktiert.

## Patentansprüche

1. Umrichter für eine elektrische Maschine, insbesondere für einen Starter oder einen Starter-Generator in einem Kraftfahrzeug, welcher eine Mehrzahl an Brückenschaltungen aufweist, wobei jede Brückenschaltung ein Leistungsmodul (LM) mit zumindest zwei steuerbaren elektrischen Schaltern (11, 12, 21, 22, 31, 32, n1, n2) aufweist, welches mit einem an der Oberfläche der Maschine angeordneten Folienkondensator (FK) zur Erzeugung eines jeweiligen Zwischenspeichers einer Brückenschaltung elektrisch verbunden ist, **dadurch gekennzeichnet, dass** die elektrische Verbindung zwischen einer Brückenschaltung und dem Folienkondensator (FK) busbarlos ausgebildet ist.

2. Umrichter nach Anspruch 1, **dadurch gekennzeichnet, dass** die busbarlose elektrische Verbindung zwischen einer Brückenschaltung und dem Folienkondensator (FK) über jeweils separate Verbindungsleitungen ohne Stromschienen ausgebildet ist.

3. Umrichter nach Anspruch 1 oder 2, **dadurch gekennzeichnet, dass** der Folienkondensator (FK) mit einer mechanisch verstärkten, elektrisch leitenden Folie gewickelt ist.

4. Umrichter nach einem der vorhergehenden Ansprüche, **dadurch gekennzeichnet, dass** die elektrische Verbindung zwischen den Elektroden (E1, E2) des Folienkondensators (FK) und dem Leistungsmodul (LM) einer Brückenschaltung über zwei dünne Streifenleitungen (SL1 bis SL4) ausgebildet ist.

5. Umrichter nach Anspruch 4, **dadurch gekennzeichnet, dass** die Streifenleitungen (SL1 bis SL4) im wesentlichen die gleiche Breite aufweisen.

6. Umrichter nach Anspruch 4 oder 5, **dadurch gekennzeichnet, dass** bei einer Draufsicht auf den Umrichter die beiden Streifenleiter (SL1 bis SL4) zur Kontaktierung der Elektroden (E1, E2) des Folienkondensators (FK) mit einem Leistungsmodul (LM) einer Brückenschaltung im Bereich des Folienkondensators (FK) deckungsgleich angeordnet sind.

7. Umrichter für eine elektrische Maschine, insbesondere für einen Starter oder einen Starter-Generator in einem Kraftfahrzeug, welcher eine Mehrzahl an Brückenschaltungen aufweist, wobei jede Brückenschaltung ein Leistungsmodul (LM) mit zumindest einem steuerbaren elektrischen Schalter (11, 12, 21, 22, 31, 32, n1, n2) aufweist und mittels Stromschienen (SS1, SS2) mit einem an der Oberfläche der Maschine angeordneten Folienkondensator (FK) zur Erzeugung eines jeweiligen Zwischenspeichers einer Brückenschaltung elektrisch verbunden ist, **dadurch gekennzeichnet, dass** der Folienkondensator (FK) stabförmig ausgebildet ist und zumindest zwei separate Teile (T1 bis T3) aufweist, wobei die ersten Elektroden (E1) der beiden Teile (T1 bis T3) mit einer ersten Stromschiene (SS1) und die zweiten Elektroden (E2) der beiden Teile (T1 bis T3) mit einer zweiten Stromschiene (SS2) elektrisch verbunden sind.

8. Umrichter nach Anspruch 7, **dadurch gekennzeichnet, dass** die separaten Teile (T1 bis T3) des Folienkondensators (FK) im wesentlichen den gleichen Abstand zur Oberfläche der elektrischen Maschine aufweisen.

9. Umrichter nach Anspruch 7 oder 8, **dadurch gekennzeichnet, dass** die beiden Teile (T1 bis T3) des Folienkondensators (FK) im wesentlichen senkrecht zueinander in einer Ebene parallel zu einer Oberfläche der elektrischen Maschine angeordnet sind.

10. Umrichter nach einem der Ansprüche 7 bis 9, **dadurch gekennzeichnet, dass** die elektrische Verbindung der Leistungsmodule busbarlos ausgebildet ist.

11. Umrichter nach einem der vorhergehenden Ansprüche, **dadurch gekennzeichnet, dass** der Folienkondensator (FK) und die Leistungsmodule (LM) der Brückenschaltungen auf einem die Maschine zumindest teilweise umgebenden Kühlkörper (KK) angeordnet sind.

12. Umrichter nach Anspruch 11, **dadurch gekennzeichnet, dass** der Folienkondensator (FK) und die Leistungsmodule (LM) der Brückenschaltungen an unterschiedlich zueinander orientierten Oberflächenseiten oder auf einer gemeinsamen Oberflächenseite des Kühlkörpers (KK) angeordnet sind.

13. Umrichter nach Anspruch 11, **dadurch gekennzeichnet, dass** der Folienkondensator (FK) und die Leistungsmodule (LM) übereinander auf einer Oberflächenseite des Kühlkörpers (KK) angeordnet sind, derart dass die Leistungsmodule (LM) zwischen dem Folienkondensator (FK) und der Oberflächenseite des Kühlkörpers (KK) ausgebildet sind.
